# EUROPÄISCHE PATENTANMELDUNG

(11) **EP 1 184 140 A1**
(43) Veröffentlichungstag der Anmeldung: **06.03.2002**
(21) Anmeldenummer: 01119896.7
(22) Anmeldetag: 17.08.2001
(51) Int. Cl.: B25J 17/02

(54) **Handhabungsvorrichtung mit einem über drei Stabpaare angetriebenen beweglichen Träger**

(30) Priorität: 01.09.2000 DE 10043073; 21.03.2001 DE 10113656
(71) Anmelder: ROBERT BOSCH GMBH, 70442 Stuttgart (DE)
(72) Erfinder: Schlaich, Peter, 71229 Leonberg (DE); Becker, Oliver, 38106 Braunschweig (DE); Wrege, Jan, 38300 Wolfenbüttel (DE)

(57) **Zusammenfassung**

Ein zur Halterung eines Geräts und/oder Werkzeugs dienender Träger (9) ist senkrecht und parallel zu einer Basisebene translatorisch beweglich. Zur Abstützung des Trägers dienen mindestens drei Stabpaare (5), die einerseits am Träger (9) und andererseits an beweglichen Halteteilen (2,3) angelenkt sind, wobei jedes Stabpaar (5) mit träger- und halteteilseitigen Wellenteilen (4,11) einen parallelogrammartigen Verbund bildet und dafür sorgt, daß die vorgenannten Wellenteile (4,11) parallel zur Basisebene ausgerichtete Achsen aufweisen.

## Beschreibung

### Stand der Technik

Die Erfindung betrifft eine Handhabungsvorrichtung mit einem zur Halterung eines Gerätes und/oder Werkzeuges dienenden, senkrecht und parallel zu einer Basisebene translatorisch beweglichen Träger, welcher über mindestens drei Stabpaare an jedem Stabpaar gesondert zugeordneten Halteteilen gehaltert ist, die auf in Draufsicht auf die Basisebene sternförmigen Bahnen beweglich angeordnet sind, wobei die Stäbe jedes Stabpaares parallel zueinander angeordnet und jeweils am Träger sowie zugeordneten Halteteil einerseits um zueinander und zur Basisebene parallele trägerfeste bzw. halteteilfeste Achsen und andererseits um zu den Stabachsen senkrechte, parallele stabfeste Querachsen schwenkbar sind, wobei die trägerfesten Achsen und die halteteilfesten Achsen in Draufsicht auf die Basisebene jeweils unterschiedlich große Dreiecke bzw. - bei mehr als drei Stabpaaren - Vielecke bilden.

Eine solche Handhabungsvorrichtung ist aus der EP 0 250 470 B1 bekannt. Nach dieser Druckschrift wird der Träger durch drei Stabpaare gehaltert, die am Träger mittels kardanischer Gelenke an in einer gemeinsamen Ebene in Form eines gleichseitigen Dreiecks fest am Träger 1 angeordneten Achszapfen angelenkt sind. Die freien Enden der Stabpaare sind mittels weiterer kardanischer Gelenke an zugewandten Enden dreier Haltearme an dort fest angeordneten weiteren Achszapfen angelenkt. Die anderen Enden der Haltearme sind mit zu den weiteren Achszapfen parallelen, mit den Haltearmen drehfest verbundenen Querachsen an einem Basisteil schwenkbar gelagert, wobei die zur Lagerung am Basisteil dienenen Querachsen der Haltearme in einer zu den Achszapfen des Trägers parallelen Ebene in Form eines gleichseitigen Dreiecks angeordnet sind.

Der Träger kann nach der EP 0 250 470 B1 praktisch beliebig bewegt werden. Dabei bleibt die Ebene der trägerseitigen Achszapfen parallel zur Ebene der Querachsen, mit denen die Haltearme am Basisteil schwenkgelagert sind.

### Vorteile der Erfindung

Bei der Erfindung ist jedes Stabpaar mit am Träger und am jeweils zugeordneten Halteteil radial und axial fest drehgelagerten Wellenteilen parallelogrammartig verbunden, derart, daß das jeweilige Stabpaar relativ zu den zugeordneten Wellenteilen nur um die stabfesten Querachsen schwenkbar ist.

Die Erfindung beruht auf dem allgemeinen Gedanken, zwischen miteinander unmittelbar verbundenen Teilen nur Gelenkkonstruktionen mit eindimensionalen Lagern bzw. nur Verbindungen mit einem Freiheitsgrad der Beweglichkeit vorzusehen, d.h. die Wellenteile sind bezüglich des Trägers bzw. des jeweiligen Halteteiles nur um die Wellenteilachse drehbar, und die Stäbe der Stabpaare sind bezüglich der Wellenteile nur um jeweils eine stabfeste Querachse schwenkbeweglich. Damit können die Stäbe eines Stabpaares und die zugeordneten Wellenteile einen vergleichsweise verwindungssteifen, stabilen, parallelogrammförmigen Verbund bilden, so daß der Träger hohe Belastungen aufnehmen kann, ohne hinsichtlich der Freiheitsgrade der Beweglichkeit des Trägers Einbußen hinnehmen zu müssen. Ein weiterer Vorteil der Gelenkkonstruktionen mit eindimensionalen Lagern besteht darin, daß ohne weiteres eine spielfreie und reibungsarme Lagerung gewährleistet werden kann. Dies ist ein deutlicher Vorteil gegenüber Kugelgelenken.

Die Wellenteile können gemäß einer bevorzugten Ausführungsform der Erfindung als Hülsenteile ausgebildet sein, die jeweils axial geschlitzt sind, so daß die Stäbe jedes Stabpaares mit endseitigen, als Flachstücke ausgebildeten Fortsätzen in den Schlitz eingesteckt und innerhalb des Hülsenteils mit Bolzen gehaltert werden können, die entsprechende Querbohrungen im Hülsenteil sowie in den jeweiligen Fortsätzen durchsetzen.

Statt dessen ist es auch möglich, die Stäbe eines Stabpaares mit endseitigen Ösen- bzw. Gabelteilen zu versehen, die das jeweils zugeordnete Wellenteil umgreifen und am Wellenteil mit Bolzen gehaltert werden können, die entsprechende Querbohrungen im Wellenteil sowie in den Ösen- bzw. Gabelteilen durchsetzen.

Vorzugsweise sind die Halteteile an stabilen Führungsschienen verschiebbar angeordnet, die ihrerseits die Basisebene bilden bzw. auf der Basisebene verankert sind. Bei dieser Ausführungsform wird eine besonders hohe Stabilität erreicht.

Weitere wichtige Merkmale und Vorteile der erfindungsgemäßen Handhabungsvorrichtung ergeben sich aus den Unteransprüchen sowie der Zeichnung und der zugehörigen Beschreibung.

### Zeichnungen

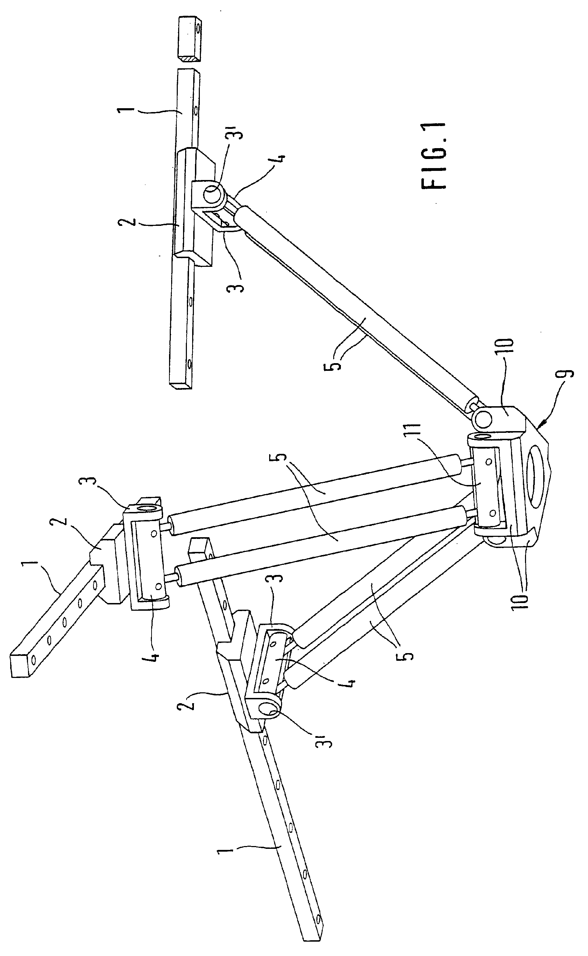

Nachfolgend wird eine besonders bevorzugte Ausführungsform der Erfindung an Hand der Zeichnungen dargestellt. Dabei zeigt
- Fig. 1: eine perspektivische Gesamtansicht der erfindungsgemäßen Handhabungsvorrichtung.

Gemäß Fig. 1 sind auf einer nicht näher dargestellten Basisplattform, welche gegebenenfalls beweglich sein kann, drei Führungsschienen 1 fest angeordnet, deren Längsachsen sich in einem Zentrum schneiden und miteinander Winkel von 120° bilden.

Auf den Führungsschienen sind Schieber 2 spielfrei geführt. Jeder Schieber 2 trägt ein fest mit ihm verbundenes Lagerteil 3 mit zwei gleichachsig zueinander angeordneten Lageraugen 3', wobei die Achse der Lageraugen 3' quer zur Längsachse der jeweiligen Führungsschiene 1 ausgerichtet ist. In den Lageraugen 3' ist jeweils ein Wellenteil in Form eine Hülse 4 drehgelagert, die gelenkig mit einem Stabpaar 5 verbunden ist, wobei die Stäbe des Stabpaares 5 um parallele, quer zu den Stab- und Hülsenlängsachsen ausgerichtete Schwenkachsen schwenkbar sind.

Die Stäbe jedes Stabpaares 5 sind an der jeweiligen Hülse 4 scharnierartig angelenkt. Dazu besitzen die Stäbe jedes Stabpaares 5 endseitige Flachstücke oder sonstige Fortsätze, die in entsprechende Axialschlitze der Hülse 4 eingesteckt und innerhalb der Hülse 4 mit Bolzen schwenkbar gehaltert sind, die entsprechende Querbohrungen in der Hülse 4 sowie jeweils eine Bohrung in den Flachstücken bzw. Fortsätzen durchsetzen. Die Stäbe jedes Stabpaares 5 sind dabei relativ zur jeweiligen Hülse 4 nur in einer Axialebene der Hülse 4 schwenkbeweglich.

Die Stabpaare 5 dienen zur Halterung eines Werkzeug- bzw. Geräteträgers 9, wobei zur gelenkigen Verbindung des Trägers 9 mit den Stabpaaren 5 am Träger 9 Lagerteile 10 fest angeordnet sind, welche im Wesentlichen gleichartig zu den Lagerteilen 3 der Schieber 2 ausgebildet sind und wiederum zur Drehlagerung von Hülsen 11 entsprechend den Hülsen 4 dienen, wobei die Stäbe des jeweiligen Stabpaares 5 mit der Hülse 11 in gleicher Weise wie mit der Hülse 4 verbunden sind.

Jedes Stabpaar 5 bildet also mit den beiden Hülsen 4 und 11 einen parallelogrammartigen Verbund, wobei die Parallelogrammebene auf Grund der Drehlagerung der Hülsen 4 und 11 in den jeweiligen Lagerteilen 3 und 10 relativ zu den vorgenannten Lagerteilen 3 und 10 schwenkbar ist und die Stäbe des jeweiligen Stabpaares 5 jeweils gemeinsame Schwenkbewegungen in der Parallelogrammebene ausführen können.

Da die Achsen der Hülsen 4 und 11 in zueinander parallelen Ebenen liegen, die parallel zur Basisebene der Führungsschienen 1 liegt, bleibt der Träger 9 mit den Achsen der zugeordneten Hülsen 11 immer parallel zur Basisebene, wobei der Träger 9 bei Verschiebung der Schieber 2 relativ zur Basisebene eine Vertikalbewegung und/oder eine translatorische Bewegung parallel zur Basisebene ausführt und eine stabile, reproduzierbare Lage des Trägers 9 vorgegeben wird, solange das von den Achsen der Hülsen 4 gebildete Dreieck und das dazu ähnliche, von den Achsen der Hülsen 11 gebildete Dreieck ungleiche Größen haben, wobei in der Regel das von den Achsen der Hülsen 4 gebildete Dreieck größer als das andere genannte Dreieck bleibt.

Durch präzise Schiebeantriebe für die Schieber 2 lässt sich der Träger 9 vertikal und/oder parallel zur Basisebene verstellen.

Stattdessen ist es auch möglich, den Hülsen 4 oder 11 Drehantriebe zuzuordnen durch die die Neigung der den jeweiligen Stabpaaren zugeordneten Parallelogrammebenen relativ zur Basisebene vorgegeben wird.

Grundsätzlich wird die Lage des Trägers 9 relativ zur Basisebene durch insgesamt drei, jeweils einem Stabpaar zugeordnete Parameter festgelegt, wobei dieser Parameter durch die Stellung des dem jeweiligen Stabpaar 5 zugeordneten Schiebers 2 oder die Drehlage einer der Hülsen 4 oder 11 des jeweiligen Stabpaares bestimmt wird.

Beispielsweise besteht die Möglichkeit, anstelle einer Anordnung mit drei Antrieben für die drei Schieber 2 lediglich zwei Schieber 2 mit Schiebeantrieben zu versehen und dem Stabpaar 5 des Schiebers 2 ohne Schiebeantrieb einen Drehantrieb für die Hülse 4 oder 11 zuzuordnen.

Der Träger 9 kann zur Halterung eines Geräts, beispielsweise einer Kamera, oder eines Werkzeugs, beispielsweise eines Greifwerkzeugs, dienen, wobei sowohl das Gerät als auch das Werkzeug am Träger 9 gegebenenfalls beweglich angeordnet sein können, insbesondere mit Drehbarkeit um eine zur Basisebene senkrechte Achse. Der für die Ausführung der Bewegungen von Werkzeug oder Gerät notwendige Stellantrieb ist vorzugsweise am Träger 9 angeordnet.

Abweichend von der dargestellten Ausführungsform können die Stäbe der Stabpaare 5 jeweils endseitig mit Gabelstücken fest verbunden sein, die die Hülsen 4 bzw. 11 außen umgreifen und mit den Hülsen durch Bolzen gelenkig verbunden sind, die die Gabelenden sowie die jeweilige Hülse 4 bzw. 11 durchsetzen.

### Bezugszeichenliste

- 1: Führungsschienen
- 2: Schieber
- 3: Lagerteil
- 3': Lageraugen
- 4: Hülsen
- 5: Stabpaare
- 9: Träger
- 10: Lagerteile
- 11: Hülsen

## Patentansprüche

1. Handhabungsvorrichtung mit einem zur Halterung eines Gerätes und/oder Werkzeuges dienenden, senkrecht und parallel zu einer Basisebene translatorisch beweglichen Träger (9), welcher über mindestens drei Stabpaare (5) an jedem Stabpaar (5) gesondert zugeordneten Halteteilen (2, 3) gehaltert ist, die auf in Draufsicht auf die Basisebene sternförmigen Bahnen beweglich angeordnet sind, wobei die Stäbe jedes Stabpaares (5) parallel zueinander angeordnet und jeweils am Träger (9) sowie zugeordneten Halteteil (2, 3) einerseits um zueinander und zur Basisebene parallele trägerfeste bzw. halteteilfeste Achsen und andererseits um zu den Stabachsen senkrechte, parallele stabfeste Querachsen schwenkbar sind, wobei die trägerfesten und die halteteilfesten Achsen in Draufsicht auf die Basisebene jeweils unterschiedlich große Dreiecke bzw. - bei mehr als drei Stabpaaren - Vielecke bilden,
**dadurch gekennzeichnet,**
**dass** jedes Stabpaar (5) mit am Träger (9) und am jeweils zugeordneten Halteteil (2, 3) radial und fest drehgelagerten Wellenteilen (4, 11) parallelogrammartig verbunden und relativ zu den Wellenteilen (4, 11) nur um die stabfesten Querachsen schwenkbar ist.

2. Handhabungsvorrichtung nach Anspruch 1,
**dadurch gekennzeichnet, dass** die Stäbe jedes Stabpaares (5) träger- und/oder halteteilseitig an einem Hülsenteil (4, 11), welches am Träger (9) bzw. am Halteteil (2, 3) mit Drehbarkeit um seine Achse gelagert ist, angelenkt sind.

3. Handhabungsvorrichtung nach Anspruch 1 oder 2,
**dadurch gekennzeichnet, dass** die Stäbe jedes Stabpaares (5) mit endseitigen Fortsätzen, z.B. Flachstücken, in zumindest einen Axialschlitz des zugeordneten Wellen- bzw. Hülsenteiles (4, 11) eingesteckt und innerhalb des Hülsen- bzw. Wellenteiles mit Bolzen gehaltert sind, die entsprechende Querbohrungen im Hülsen- bzw. Wellenteil sowie im jeweiligen Fortsatz durchsetzt.

4. Handhabungsvorrichtung nach Anspruch 1 oder 2,
**dadurch gekennzeichnet, dass** die Stäbe jedes Stabpaares (5) träger- und/oder halteteilseitig mit Gabel- bzw. Ösenstücken das zugeordnete Wellen- bzw. Hülsenteil (4, 11) umgreifen und am Wellen- bzw. Hülsenteil (4, 11) mit Bolzen gehaltert sind, die entsprechende Querbohrungen im Wellen- bzw. Hülsenteil (4, 11) sowie in den dieses Teil umgreifenden Bereichen der Gabel- bzw. Ösenstücke durchsetzen.

5. Handhabungsvorrichtung nach einem der Ansprüche 1 bis 4,
**dadurch gekennzeichnet, dass** die Halteteile (2, 3) schieberartig an zur Basisebene festen Führungsschienen (1) angeordnet sind.

6. Handhabungsvorrichtung nach Anspruch 5,
**dadurch gekennzeichnet, dass** den Halteteilen (2, 3) Verschiebeantriebe zugeordnet sind.

7. Handhabungsvorrichtung nach einem der Ansprüche 1 bis 6,
**dadurch gekennzeichnet, dass** am Träger (9) ein Gerät und/oder ein Werkzeug beweglich angeordnet sind.

8. Handhabungsvorrichtung nach Anspruch 7,
**dadurch gekennzeichnet, dass** am Träger (9) ein Antrieb zur Bewegung des Gerätes und/oder des Werkzeuges angeordnet ist.
